# EUROPEAN PATENT SPECIFICATION

(11) **EP 0 372 604 B1**
(45) Date of publication and mention of the grant of the patent: **08.09.1993**
(21) Application number: 89202909.1
(22) Date of filing: 17.11.1989
(51) Int. Cl.: F16L 27/12, F16L 37/12

(54) **Connector for devices designed to be fitted onto conduits in a pressurized fluid system**
Verbindungsstück für Vorrichtungen, die mit Rohrleitungen eines Druckmittelsystems verbunden werden
Raccord pour dispositifs de connexion avec conduits d'un système de fluides sous pression

(30) Priority: 02.12.1988 IT 2224488 U
(43) Date of publication of application: 13.06.1990
(73) Proprietor: METAL WORK S.p.A., I-25062 Concesio (Brescia) (IT)
(72) Inventor: Rodella, Fausto, I-25060 Collebeato (Brescia) (IT)
(74) Representative: Faraggiana, Vittorio, Dr. Ing.

(56) References cited:
- DE-A- 1 476 791
- DE-A- 2 909 936
- FR-A- 2 496 220
- FR-A- 2 566 506
- US-A- 2 521 127
- US-A- 4 640 533

## Description

Those engaged in installing hydraulic, pneumatic or other types of fluid systems with airtight pipes are acquainted with the problems which exist during installation in securing the connectors fitted on the various fixed devices in the system to the pipes onto which they are to be fitted.

These problems are basically due both to the tolerances in cutting the pipes to size and to the necessary allowance which must be left for the axial movement of the connectors when they are screwed on and, moreover, to the fact that it is almost always impossible to rotate fixed devices or pipes.

In the known technique a solution was sought by providing additional connecting means in the form of an adapter, with suitably movable portions, connectable between the threaded end of the pipe and the corresponding connector fitted on the fixed device.

This solution, which implies the use of a further component (the adapter), increases fitting times, entails an additional expense and gives rise to the need to keep a stock of these components, which must also be differentiated in size according to the diameter of the pipes to be connected.

A different solution in described in FR-A-2 496 220. Said reference discloses a connector for the fitting of the extremity of a smooth tube. The tube extremity is fitted by force in a seat of the connector in this way being tightly sealed by means of a gasket. A ring tightens the tube in order to prevent the sliding from its seat in the connector.

The scope of this invention is to obviate the aforementioned and other problems by providing a connector integrated with any type of device used in a pressurized fluid system, which allows the necessary freedom of movement for screwing a pipe onto it.

The aforesaid scope is achieved by providing a connector for devices designed to be fitted onto conduits in a pressurized fluid system, including an element to be screwed onto a complementary conduit mouthpiece, characterized by the fact that said element comprises a first end threaded to be screwed to the complementary mouthpiece and a cylindrical portion at the opposite second which is fitted in an axially and rotatably movable way in a complementary housing in the device and is airtight therewith, clasping means being provided in the body of the device to clasp around said element in order to prevent the movement of said element once it has been fitted onto the mouthpiece.

The advantages of this invention with respect to the known technique can be more clearly understood from the following description of a possible exemplary embodiment, with reference to the accompanying drawings, in which:
- figure 1 shows a schematic front partial cross-sectional view along line I-I of figure 2, of an integrated connector constructed according to the invention;
- figure 2 shows a lateral cross-sectional view along line II-II of figure 1.

With reference to the figures, an integrated connector, generically indicated by reference 10, applying the innovatory principles of this invention, comprises a connecting head 11, disposed on a generic device to be connected which, since it can be of any known type, is neither shown nor further described. Said head is provided with a duct 12, end of the duct of the device to be connected, and a generically toroidal groove 13, coaxial to the duct to form a tubular end 14 over which a generically cylindrical axially perforated coupling 15 is movably and rotatably partially fitted to form a prolongation of the duct 12.

A second toroidal groove, concentric to the first, constitutes an enlargement 16 of the latter and a housing for a stop ring 17, cut along a radius to form a slot 29, and with its internal portion partially protruding into the groove 13.

The stop ring 17 is kept in place by a snap ring 18 housed in a circumferential recess 19 in the wall externally delimiting the groove 16.

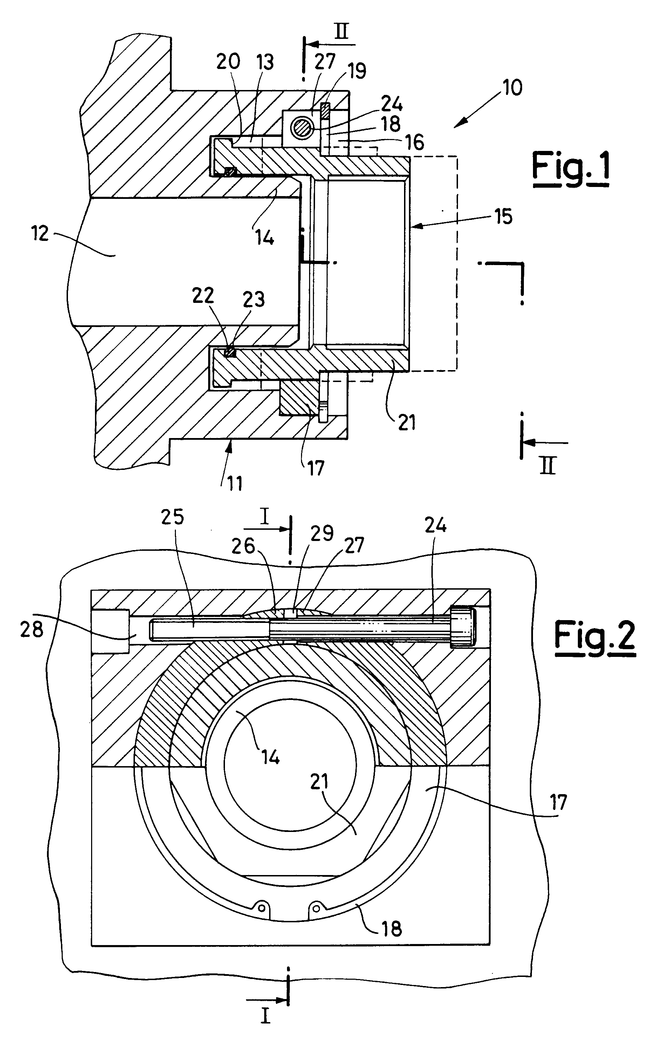

In this way the coupling 15 is movable from a retracted position (as shown in figure 1 by the continuous line), in which its end inside the groove 13 is close to the bottom of the latter, to a partially extracted position (shown by the dotted line in figure 1), in which the internal end of the coupling rests, by a ledge 20 provided thereon, against the protruding edge of the ring 17.

The portion 21 of the coupling 15, protruding from the head 11, is (as can be clearly seen in figure 2) externally shaped like a prism with a substantially hexagonal base, while internally it is threaded.

In order to ensure the seal between the external wall of the tubular end 14 and corresponding internal wall of the coupling 15, the latter is provided with an O-ring 22 housed in an appropriate recess 23.

As can be seen in figure 2, the head 11 is perforated between two opposing walls, as generically indicated by reference 28, in order to constitute an extension of holes made in the open ends 26, 27 of the ring 17. Said holes are penetrated by a screw whose axis thus lies substantially tangent to the median circumference of the ring 17. Said screw is threaded only on one end portion 25, so as to engage only with the matching threaded hole, in the end 26 of the ring, opposite the head of the screw 24. The perforations 28 in the body 11 and the hole on the end 27 are larger in diameter than the external diameter of the threaded portion 25 so that the latter can be inserted through them without engaging.

The above-described connector operates as follows.

The threaded end of the coupling 15 is screwed onto the correspondingly threaded end of a pipe that is to be fitted onto the device of which the connector 10 forms an integral part.

Screwing the pipe and the device together without rotating them is made possible by the freedom of rotation of the coupling 15 in the groove 13 and facilitated by the hexagonal shape of the coupling which enables it to be turned with a suitable wrench.

Thanks to the invention, the length of the pipe can take advantage of a certain tolerance: it is sufficient to ensure that the end to be fitted is in a position ranging from the immediate vicinity of the free end of the coupling 15 when it is in the retracted position, to the position assumed by said free end of the coupling in the extracted position minus the length of thread considered necessary for securing the connection.

During the screwing the coupling 15 moves axially towards the outside of the groove 13 compensating the relative axial movements due to the screwing action and thus making it possible neither to move the device of which the head 11 forms part, nor the pipe.

On completion of the screwing, in order to prevent any possible relative movements between the pipe and the device, it is sufficient to tighten the screw 24 so as to force the stop ring 17 against the external wall of the coupling 15 thereby locking it and preventing any possible rotational or translatory movement due to friction.

The head 11, represented as being parallelepipedon in shape, can be of any other shape (for example, cylindrical according to an axis parallel to the extension of the conduit 12). Likewise, the system for preventing movement once a pipe has been screwed onto the connector can be modified with respect to the one shown in the drawings, by inserting surfaces for preventing rotation of the ring in order to prevent any possible undesirable slipping of the latter on the securing screw, or by using other known techniques for tightening the ring on the coupling.

Lastly, the coupling can, if necessary, be threaded externally instead of internally and, moreover, the surface by which it is gripped in order to screw it on can, instead of hexagonal or more generically polygonal, be of any known shape suitable for the purpose, such as for example, simply knurled.

## Claims

1. A connector (10) for devices designed to be fitted onto conduits in a pressurized fluid system, including an element (15) to be screwed to a complementary conduit mouthpiece, characterized by the fact that said element comprises a first end (21) threaded to be screwed to the complementary mouthpiece and a cylindrical portion at opposite second end which is fitted in an axially and rotatably movable way in complementary housing (13) in the device and in airtight therewith, clasping means (17) being provided in the body of the device to clasp around said element (15) in order to prevent the movement of said element (15) once it has been fitted onto the mouthpiece.

2. A connector as claimed in claim 1, characterized by the fact that said clasping means (17) comprise a stop ring (17) which can be radially fastened over said element (15).

3. A connector as claimed in claim 2, characterized by the fact that the stop ring (17) is provided with a cut along one radius, and that the two opposing egdes (26, 27), defined by such cut, can be compressed towards each other by means of a screw (24) to form said radial fastening.

4. A connector as claimed in claim 1, characterized by the fact that an O-ring (22) is disposed between the cylindrical portion of the element (15) and the complementary housing (13).

5. A connector as claimed in claim 2, characterized by the fact that said stop ring (17) also engages with a ledge (20) extending towards the outside of the element (15) in order to prevent it from slipping out completely from the complementary housing (13).

6. A connector as claimed in claim 2, characterized by the fact that the stop ring (17) is secured to the device by its insertion in a housing (16) in the latter and prevented from slipping out of said housing (16) by means of a snap ring (18) with it outer edge partially inserted into a groove (19) made around the mouth of said housing (16).

7. A connector as claimed in claim 1, characterized by the fact that the element (15) is provided with a polygonal-shaped external gripping portion (21).

## Patentansprüche

1. Verbindungsstück für mit Rohrleitungen eines Druckmittelsystems zu verbindende Vorrichtungen, das ein an ein zusätzliches Leitungsmundstück anschraubbares Kopplungselement (15) enthält, dadurch gekennzeichnet, daß das vorgenannte Kopplungselement (15) einen mit Gewinde versehenen ersten Endabschnitt (21), der mit dem zusätzlichen Leitungsstück zu verschrauben ist, und einen zweiten entgegengesetzten zylindrischen Endabschnitt, der unter Abdichtung in axialer Richtung beweglich und verdrehbar in einer zusätzlichen Aufnahme (13) angebracht ist, enthält, und daß am Körper der Vorrichtung ein Klemmorgan (17) vorgesehen ist, welches das Kopplungselement (15) festklemmt, um es daran zu hindern, sich zu bewegen, sobald es an dem Leitungsmundstück angebracht worden ist.

2. Verbindungsstück nach Anspruch 1, dadurch gekennzeichnet, daß das Klemmorgan (17) einen Haltering (17) enthält, der am Kopplungselement (15) radial klemmend festgelegt werden kann.

3. Verbindungsstück nach Anspruch 2, dadurch gekennzeichnet, daß der Haltering (17) entlang einem Radius geschlitzt ist und daß die durch den Schlitz gebildeten, beiden einander gegenüberliegenden Randkanten (26,27) mit Hilfe einer Schraube (24) zusammengepreßt werden, um so den Haltering durch Klemmen festzulegen.

4. Verbindungsstück nach Anspruch 1, dadurch gekennzeichnet, daß zwischen dem zylindrischen Teil des Kopplungselementes (15) und der zusätzlichen Aufnahme (13) ein O-Ring (22) vorgesehen ist.

5. Verbindungsstück nach Anspruch 2, dadurch gekennzeichnet, daß der Haltering (17) mit einer am Kopplungselement (15) vorgesehenen, radial nach außen vorspringenden Anschlagleiste (20) eingreifen kann, um das Kopplungselement (15) daran zu hindern, vollständig aus der zusätzlichen Aufnahme (13) herauszugleiten.

6. Verbindungsstück nach Anspruch 2, dadurch gekennzeichnet, daß der Haltering (17) an der Vorrichtung dadurch befestigt ist, daß er in eine Ausnehmung (16) der letzteren eingesetzt und gegen Herausgleiten aus ihr durch einen Sprengring (18) gesichert ist, dessen Außenrandpartie teilweise in eine an der Mündung der Ausnehmung (16) vorgesehene Ringnut (19) einsitzt.

7. Verbindungsstück nach Anspruch 1, dadurch gekennzeichnet, daß das Kopplungselement (15) außen einen vielkantoder polygonförmigen, als Griffstück ausgebildeten Abschnitt (21) besitzt.

## Revendications

1. Raccord (10) pour des dispositifs destinés à être montés sur des conduits d'un système à fluide sous pression, comportant un élément (15) à visser sur un embout complémentaire d'un conduit, caractérisé en ce que ledit élément comprend une première extrémité (21) filetée pour être vissée sur l'embout complémentaire et, à la seconde extrémité opposée, une partie cylindrique montée de manière à pouvoir se déplacer axialement et à tourner dans un logement complémentaire (13) situé dans le dispositif et est étanche à l'air avec celui-ci, un moyen de serrage (17) étant présent dans le corps du dispositif pour serrer le pourtour dudit élément (15) afin d'empêcher que ledit élément (15) ne bouge une fois qu'il a été monté sur l'embout.

2. Raccord selon la revendication 1, caractérisé en ce que ledit moyen de serrage (17) comporte une bague d'arrêt (17) qui peut être fixée radialement sur ledit élément (15).

3. Raccord selon la revendication 2, caractérisé en ce que la bague d'arrêt (17) est pourvue d'une entaille radiale, et en ce que les deux bords opposés (26, 27), définis par cette entaille, peuvent être comprimés l'un vers l'autre à l'aide d'une vis (24) pour réaliser ladite fixation radiale.

4. Raccord selon la revendication 1, caractérisé en ce qu'un joint torique (22) est disposé entre la partie cylindrique de l'élément (15) et le logement complémentaire (13).

5. Raccord selon la revendication 2, caractérisé en ce que ladite bague d'arrêt (17) vient aussi contre un rebord (20) s'étendant vers l'extérieur de l'élément (15) afin de l'empêcher de sortir complètement du logement complémentaire (13) par coulissement.

6. Raccord selon la revendication 2, caractérisé en ce que la bague d'arrêt (17) est fixée au dispositif grâce à son insertion dans un logement (16) présent dans le dernier et un jonc d'arrêt (18) l'empêche de sortir dudit logement (16) par coulissement, son bord extérieur pénétrant partiellement dans une gorge (19) réalisée autour de l'embout dudit logement (16).

7. Raccord selon la revendication 1, caractérisé en ce que l'élément (15) est pourvu d'une partie (21) de forme polygonale permettant de le saisir de l'extérieur.
